# EUROPÄISCHE PATENTANMELDUNG

(11) **EP 1 065 905 A2**
(43) Veröffentlichungstag der Anmeldung: **03.01.2001**
(21) Anmeldenummer: 00113900.5
(22) Anmeldetag: 30.06.2000
(51) Int. Cl.: H04Q 11/00, G02B 6/43

(54) **Lichtwellenleiter-Bussystem für Backplaneanwendungen**

(30) Priorität: 01.07.1999 DE 19930418
(71) Anmelder: TYCO Electronics Logistics AG, 9323 Steinach (CH)
(72) Erfinder: Schmidt, Helge, Dr., 67346 Speyer (DE); Bleck, Oliver, 80639 München (DE)
(74) Vertreter: Hirsch, Peter

(57) **Zusammenfassung**

Die Lichtwellenleiter (6) der n-Kanäle eines Teilnehmers m sind jeweils nebeneinander planar in eine optische Backplane-Ebene (5) integriert, die mit den Ebenen (5) weiterer Teilnehmer eine geschichtete Backplane-Struktur (3) bildet. Diese ist mit Koppler-Paketen (8) aus planaren, paketierten optischen Kopplern (4) und mit Hilfe von optischen Verbindungsmitteln (10) zu einer Sternkopplerstruktur zusammengesetzt. Es resultiert ein platzsparendes optisches Bussystem, daß mit einer elektrischen Backplane kombiniert werden kann.

## Beschreibung

Die Erfindung betrifft ein Lichtwellenleiter-Bussystem, insbesondere für Backplaneanwendungen, mit durch Sternkoppler verbundenen m-Teilnehmern mit jeweils n-Kanälen.

Busse verbinden bekanntlich räumlich mehr oder minder voneinander getrennte Teilnehmer zum Zwecke des Datenaustauschs bzw. der Zusammenarbeit. Der Bus wird jeweils aus einem passiven Medium gebildet, über das die Daten übertragen werden. Die Teilnehmer sind Quelle und Ziel der Daten und weisen Transceiver, das heiß Sender/Empfänger für die nachrichtentechnische Handhabung der Daten auf. Bekannt sind insbesondere Bussysteme mit Linien-, Ring- oder Sternstruktur zwischen den Teilnehmern.

Als Backplane wird die oberste hierarchische Ebene des Systemaufbaus eines elektronischen (Teil-)Systems bezeichnet. Bekannt sind insbesondere die heute üblichen elektrischen Backplanesysteme, bei denen beispielsweise mehrere jeweils mit Prozessoren bestückte Schaltungsträger senkrecht auf einer Mutterplatine, der Backplane, montiert werden. Für hohe Übertragungsraten werden dabei koaxiale Verbindungen bzw. Stripline-Verbindungen auf der Backplane eingesetzt. Durch die fortlaufende Steigerung der benötigten Datenübertragungsraten im Telecom- und Datacombereich werden in Zukunft elektrische Backplanesysteme trotz großen Aufwands nicht mehr in der Lage sein, die geforderten Übertragungsraten zu erreichen. Zunehmend kommt auch der Unterdrückung elektromagnetischer Interferenzen (Übersprechen) zwischen den einzelnen Kanälen größere Bedeutung zu.

Andererseits sind die derzeit bekannten optischen Systeme, die sowohl das Problem der Übertragungsrate als auch des Übersprechens lösen, zumeist auf einfache oder mehrfache Punkt zu Punkt Verbindungen zweier Steckkarten miteinander beschränkt. Da bei einem optischen Bus mit mehreren Teilnehmern (z. B. Steckkarten) mit jeweils mehreren Kanälen jeder Kanal mit allen Kanälen aller anderen Teilnehmer kommunizieren soll, werden Sternkopplerstrukturen benötigt. Derartige Systeme werden bisher in Silizium- oder Glassubstraten verwirklicht, die aufgrund ihres Aufbaus relativ viel Platz einnehmen. Da für jeden einzelnen Kanal eines Bussystems ein Sternkoppler zur Verfügung gestellt werden muß, beansprucht eine solche Lösung bisher viel Platz. Zudem stellt die Anzahl der benötigten Lichtwellenleiter (m-Steckkarten x n-Kanäle x 2) ein weiteres Problem sowohl in bezug auf den Platzverbrauch als auch in bezug auf das Handling dar. Die bisher bekannten optischen Sternstrukturen verknüpfen nur wenige Kanäle bzw. wenige Steckkarten in einer offenen Verkabelung miteinander.

Ziel der vorliegenden Erfindung ist es, ein einfach aufgebautes und platzsparendes Lichtwellenleiter-Bussystem der eingangs genannten Art, insbesondere für Backplaneanwendungen, zu schaffen.

Erfindungsgemäß wird dieses Ziel bei einem Lichtwellenleiter-Bussystem der eingangs genannten Art dadurch erreicht,
- daß die Lichtwellenleiter der n-Kanäle eines Teilnehmers m jeweils nebeneinander planar in eine optische Backplane-Ebene integriert sind,
- daß die Backplane-Ebenen von mindestens zwei Teilnehmern übereinander angeordnet sind und eine geschichtete Backplane-Struktur bilden,
- daß planare, zu mindestens einer Schichtstruktur paketierte optische Koppler vorgesehen sind,
- und daß die geschichteten Backplane-Strukturen und die Koppler-Pakete mit Hilfe von optischen Verbindungsmitteln zu einer Sternkopplerstruktur zusammengesetzt sind, die die Signale der entsprechenden Kanäle der Senderseite aller Teilnehmer zusammenfaßt und in die Kanäle der Empfängerseite einkoppelt.

Weiterbildungen der Erfindung sind in Unteransprüchen gekennzeichnet.

Die Erfindung wird nachfolgend an Ausführungsbeispielen anhand der Zeichnungen näher erläutert. Es zeigt
- Figur 1: schematisch zwei verschiedene Ausführungen einer Backplane-Ebene für ein Bussystem gemäß der vorliegenden Erfindung,
- Figur 2: einen Teil des erfindungsgemäßen Bussystems im Blockschaltbild,
- Figur 3 und 4: Figur 3 zeigt ein Detail der in Figur 4 dargestellten Ausführungsform des optischen Bussystems,
- Figur 5 bis 8: jeweils weitere Ausführungsformen des Bussystems,
- Figur 9: ein Hilfsteil zur Justierung des erfindungsgemäßen Bussystems,
- Figur 10: eine Gesamtansicht aus einer elektrischen Backplane, die auf ihrer Unterseite zusätzlich eine erfindungsgemäße optische Backplane aufweist.

Das Prinzip der Erfindung erschließt sich am leichtesten aus einer Zusammenschau der Figuren 10 und 1 bis 3. Danach ist es möglich, aus beispielsweise vier, acht oder sechzehn Steckkarten ein optisches Sternsystem aufzubauen, das nur einen geringen Platzbedarf aufweist. Die Steckkarten kann man sich senkrecht auf die Oberfläche der elektrischen Backplane 1 gemäß Figur 10 montiert denken, wobei auf der elektrischen Backplane 1 an sich bekannte Bauelemente 2 vorzusehen sind, um die elektrischen Signale der Steckkarten in optische Signale für das Bussystem umzuwandeln bzw. umgekehrt. Das optische Bussystem besteht, wie in Figur 10 schematisch dargestellt, aus einer mehrschichtigen optischen Backplane 3, die zusätzlich zu einer elektrischen Backplane 1 eingesetzt wird. Zum optischen Bussystem gehören ferner optische Koppler 8, in Figur 10 nicht erkennbar, die derart mit den Backplane-Ebenen 5 gekoppelt bzw. zusammengesetzt werden, daß eine Sternkopplerstruktur entsteht, in der jeder Kanal eines beliebigen Teilnehmers mit allen Kanälen aller anderen Teilnehmer kommunizieren kann.

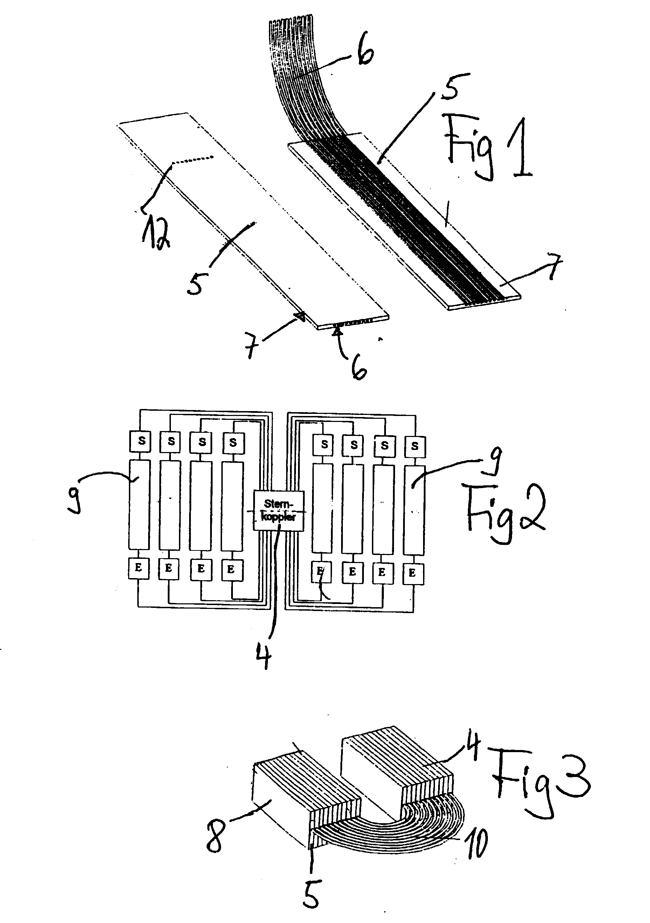

In Figur 1 sind nebeneinander zwei Aufbauvarianten der einzelnen Backplane-Ebenen 5 dargestellt. Im rechten Teil der Figur 1 sind die Lichtwellenleiter 6 einzeln nebeneinander in Führungsstrukturen, insbesondere Nuten, eines flachen Substrats 7, beispielsweise aus Glas, eingelegt. Links daneben ist angedeutet, daß die Lichtwellenleiter 6 direkt durch Integration in das Material des Trägersubstrats hergestellt sind. Lichtwellenleiter-Konfigurationen bestehen bekanntlich aus mindestens zwei Bereichen mit unterschiedlichen Brechzahlen, d.h. die Kanäle können beispielsweise mit zwei verschiedenen Kunststoffen gefüllt sein. Damit zeichnet sich die Möglichkeit der Integration der Lichtwellenleiter 6 in eine Leiterplatte ab.

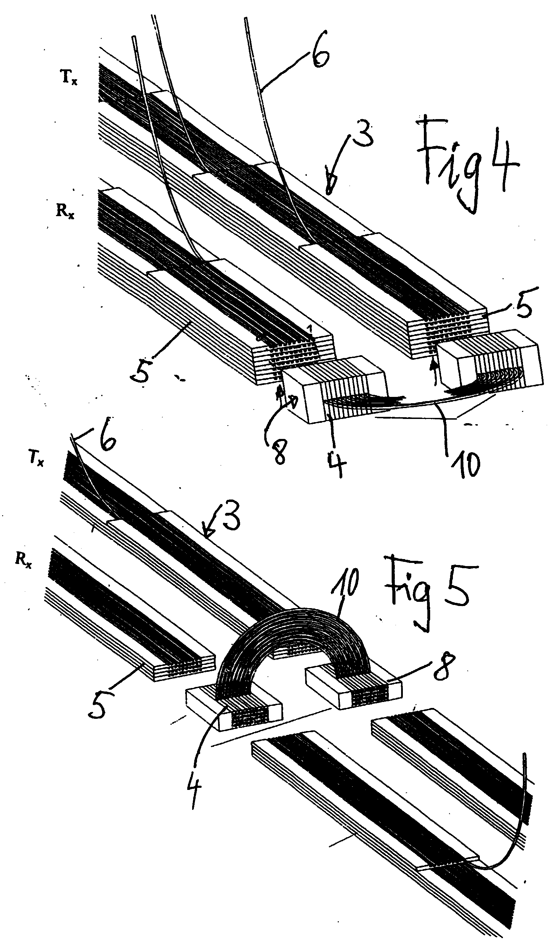

Um ein Kommunizieren mehrerer optischer Kanäle miteinander zu ermöglichen, wird für jeden Kanal ein Sternkoppler 8 benötigt, wie am Beispiel eines Kanals in Figur 2 dargestellt. Die Senderseite "S" wird durch die Signalausgänge dieses bestimmten Kanals aller, in diesem Beispiel acht, Steckkarten 9 gebildet. Diese acht Eingangssignale werden im Sternkoppler 8 zunächst "auf 1" gebracht und anschließend auf alle Ausgangsleitungen (Empfängerseite "E") gleichförmig aufgespalten.

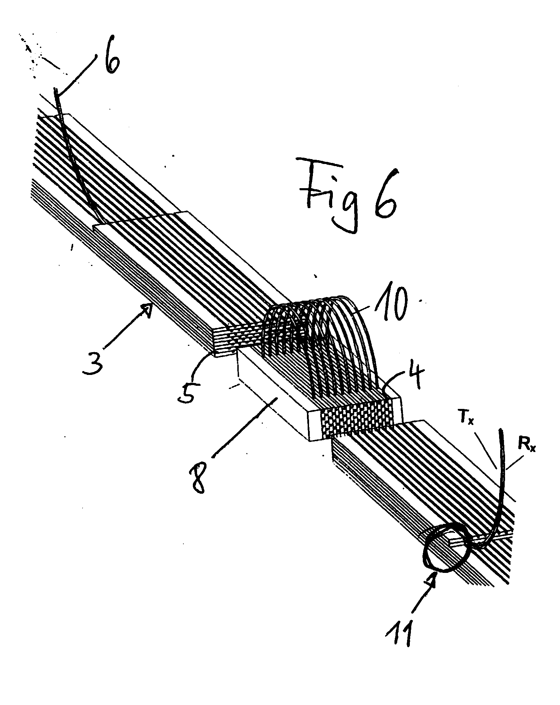

Um einen möglichst geringen Platzverbrauch zu erhalten, werden die einzelnen planaren Koppler 4 erfindungsgemäß ebenfalls in einer Schichtstruktur 8 angeordnet, vergleiche z.B. Figur 3. Das m-1-Koppler-Paket 8 in Figur 3 empfängt die Signale der m-Steckkarten.

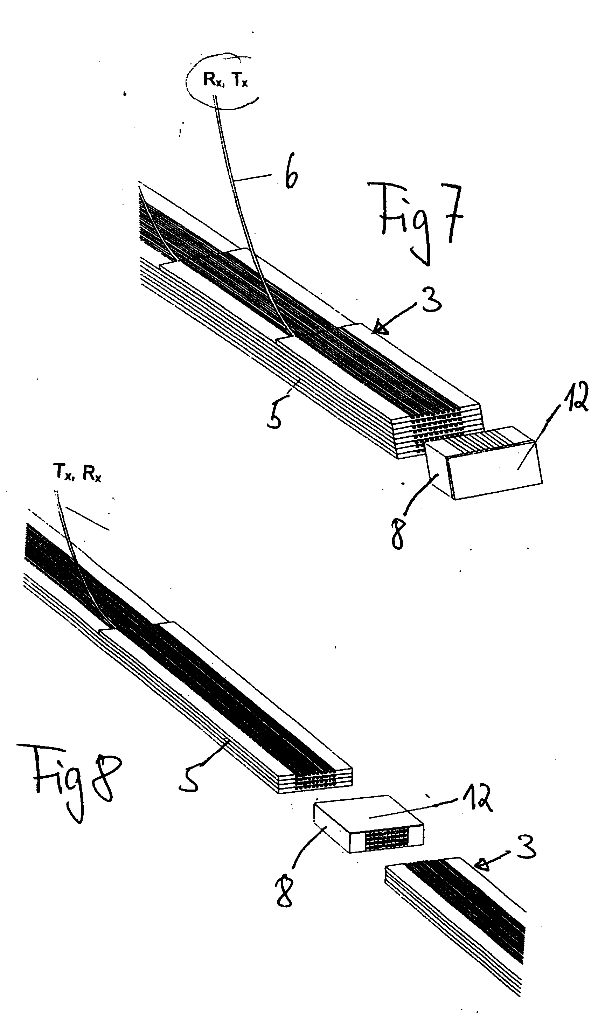

In Figur 4 ist ein Backplanesystem 3 für acht Steckkarten 9 gezeigt, wobei die einzelnen Backplane-Ebenen 5 nur zur besseren Verständlichkeit gestuft dargestellt sind und im übrigen die Herstellungsvariante mit eingelegten Lichtwellenleitern 6 zeigen. An der Stirnseite der geschichteten Backplanestruktur 3 wird das Paket 8 aus planaren Kopplern 4 angebracht. Dieses Paket wird aus n-Stück m-1-Kopplern und n-Stück 1-m-Kopplern (n=Anzahl der Kanäle, m=Anzahl der Steckkarten, Tₓ=Senderseite, Rₓ=Empfängerseite) gebildet, die in einer Schichtstruktur zusammengesetzt werden. Die n-Ausgänge dieser beiden Pakete werden durch einzelne Lichtwellenleiter 10 miteinander verbunden. Dadurch wird eine Sternkopplerstruktur gebildet, die die Signale der entsprechenden Kanäle der Senderseite zusammenfaßt und in die Kanäle der Empfängerseite einkoppelt.

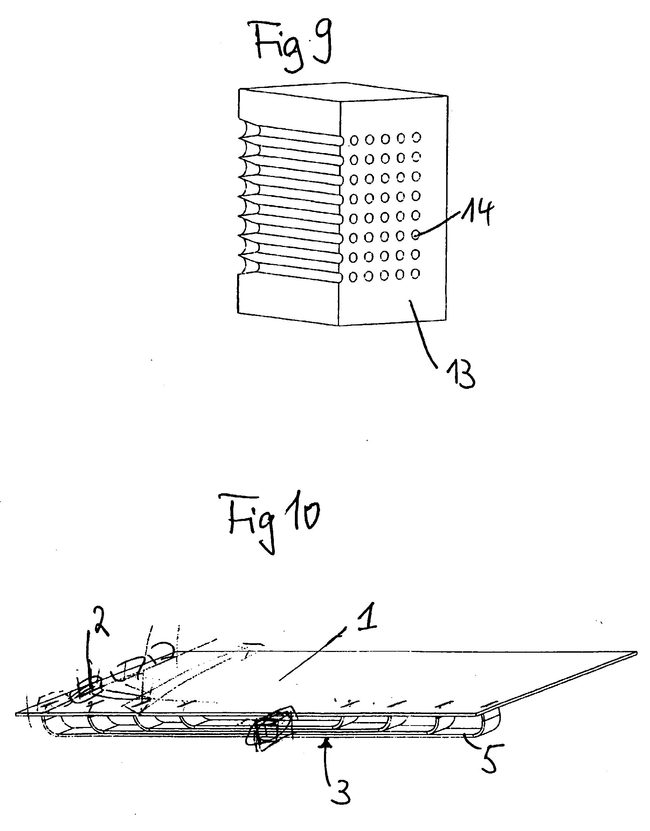

Um sowohl eine geringere Dämpfung als auch eine höhere Gleichförmigkeit aller optischen Kanäle zueinander zu erhalten, ist es sinnvoll, die Sternkopplerstruktur von der Stirnfläche der Backplanestruktur 3 in die Mitte zu verlegen. Dadurch verkleinern sich die Unterschiede in den Längen der integrierten Lichtwellenleiter 6. Diese Variante ist in Figur 5 dargestellt. Auch hier werden die m-1- und 1-m-Koppler über Lichtwellenleiter 10 zu Sternkopplern vervollständigt.

Bei den zuvor dargestellten Varianten werden die Empfänger- und die Senderseite voneinander getrennt ausgeführt. Um die seitliche Packungsdichte weiter zu erhöhen, werden in einer weiteren Variante, vergleiche Figur 6, die Sende- und Empfangskanäle in einer alternierenden Schichtstruktur, Sendeseite und Empfangsseite untereinander, vgl. 11, zusammengeführt. Die Sternkopplerstruktur für diese Variante ist so aufgebaut, daß sich die m-1-Koppler der Sendeseite mit den 1-m-Kopplern der Empfangsseite in der Schichtstruktur abwechseln. Dabei sind die Kopplerstrukturen in Längsrichtung gegeneinander versetzt, so daß sie sich mit Lichtwellenleitern 10 zu einer Sternkopplerstruktur zusammenensetzen lassen, deren seitliche Ausdehnung aufgrund der Kopplung der m-1-Koppler mit den 1-m-Kopplern in Längsrichtung geringer ist als bei den bisher genannten Ausführungen.

Die Ausführungen gemäß den Figuren 7 und 8 erhöhen nicht nur die seitliche Packungsdichte, sie vermindern zusätzlich noch die Anzahl der benötigten Backplane-Ebenen 5 und somit auch die Anzahl der benötigten Lichtwellenleiter 6. Um dies zu erreichen, werden die Ausgänge der m-1-Koppler 8 verspiegelt 12. Auf diese Art und Weise erhält man bidirektionale optische Kanäle. Um mit dieser Variante Signale sowohl senden als auch empfangen zu können, werden zum Anschluß der Sender- und Empfängermodule der Steckkarten noch 1-2-Koppler benötigt. Diese sind also nicht in die optische Backplane 3 integriert, sondern direkt beim Sender/Empfänger angeordnet.

Da bei der Verwendung von Lichtwellenleitern 6 eine hohe Genauigkeit der Koppelstellen unbedingt erforderlich ist, muß dafür Sorge getragen werden, daß nicht nur die Höhen der einzelnen Backplane-Ebenen 5 und Koppler-Ebenen 4 genau eingehalten werden. Zusätzlich müssen die Stirnflächen der Lichtwellenleiter 6 einer jeden Ebene mit einer sehr hohen Genauigkeit zueinander justiert werden. Um eine kostengünstige Realisierung zu ermöglichen, ist es vorteilhaft, passive Justagestrukturen vorzusehen.

Dies wird dadurch ermöglicht, daß die einzelnen Ebenen 4, 5 wie in einem LEGO-System übereinander gestapelt werden. Hierfür sind an genau vordefinierten Positionen Führungsstrukturen integriert. Diese können als Führungsstifte und Führungslöcher hoher Präzision ausgeführt werden. Die Form der Führungsstrukturen kann dabei sowohl zylindrisch als auch die Form von Kegeln oder Halbkugeln haben.

Eine weiteren Möglichkeit, die notwendigen Toleranzen für die Lichtwellenleiter-Stirnflächen einzuhalten, besteht darin, eine Führungsplatte vor den Backplane-Ebenen 5 anzubringen. In diese Platte 13, vergleiche Figur 9, sind Löcher 14 in dem korrekten Pitch eingebracht, die an einer Seite konisch ausgeführt sind. Dieses Hilfsteil 13 wird vor die Koppler 8 montiert. Durch die Führung in den Löchern 14 werden die Lichtwellenleiter 6 in das korrekte Raster gezwungen.

## Patentansprüche

1. Lichtwellenleiter-Bussystem, insbesondere für Backplane-Anwendungen, mit durch Sternkoppler verbundenen m-Teilnehmern mit jeweils n-Kanälen,
**dadurch gekennzeichnet,**
- daß die Lichtwellenleiter (6) der n-Kanäle eines Teilnehmers m jeweils nebeneinander planar in eine optische Backplane-Ebene (5) integriert sind,
- daß die Backplane-Ebenen (5) von mindestens zwei Teilnehmern übereinander angeordnet sind und eine geschichtete Backplane-Struktur (3) bilden,
- daß planare, zu mindestens einer Schichtstruktur (8) paketierte optische Koppler (4) vorgesehen sind,
- und daß die geschichteten Backplane-Strukturen (3) und die Koppler-Pakete (8) mit Hilfe von optischen Verbindungsmitteln (10) zu einer Sternkopplerstruktur zusammengesetzt sind, die die Signale der entsprechenden Kanäle der Senderseite aller Teilnehmer zusammenfaßt und in die Kanäle der Empfängerseite einkoppelt.

2. Lichtwellenleiter-Bussystem nach Anspruch 1,
**dadurch gekennzeichnet,**
- daß für Sender- und Empfängerseite jeweils eine m-schichtige Backplane-Struktur (3) vorhanden ist,
- und daß eine Stirnseite der senderseitigen Backplane-Struktur (3) mit einem m-1-Koppler-Paket (8) und eine Stirnseite der empfängerseitigen Backplane-Struktur (3) mit einem 1-m-Koppler-Paket (8) zusammengesetzt sind,
- wobei die Koppler-Pakete (8) jeweils n-planare, geschichtete Koppler (4) umfassen, die an einer Stirnseite jeweils einer Spalte aus Lichtwellenleitern (6) des entsprechenden Kanals aller m-Teilnehmer zugeordnet sind,
- und wobei die n entsprechenden Koppler (4) beider Pakete (8) jeweils durch einen einzelnen, nichtintegrierten Lichtwellenleiter (10) verbunden sind.

3. Lichtwellenleiter-Bussystem nach Anspruch 1,
**dadurch gekennzeichnet,** daß für Sender- und Empfängerseite jeweils zwei m/halbe schichtige Backplane-Strukturen (3) vorhanden sind, daß jeweils eine Stirnseite jeder senderseitigen Backplane-Struktur (3) mit einem m-1-Koppler-Paket (8) und jeweils eine Stirnseite jeder empfängerseitigen Backplane-Struktur (3) mit einem 1-m-Koppler-Paket zusammengesetzt sind, wobei die Koppler-Pakete (8) jeweils n planare geschichtete Koppler (4) umfassen, die an gegenüberliegenden Stirnseiten jeweils einer Spalte aus Lichtwellenleitern (6) des entsprechenden Kanals aller m/halbe Teilnehmer zugeordnet sind und wobei die n entsprechenden Koppler (4) beider Pakete (8) jeweils durch einen einzelnen, nicht integrierten Lichtwellenleiter (10) verbunden sind.

4. Lichtwellenleiter-Bussystem nach einem der Ansprüche 1 bis 3,
**dadurch gekennzeichnet,** daß für die Koppelstellen zwischen Lichtwellenleiter (6) und Kopplern (4) eine passive Justagestruktur vorgesehen ist, die durch eine zwischen Lichtwellenleiter (6) und Kopplern (4) angeordnetes Hilfsteil (13) gebildet ist, in dem an vorbestimmten Positionen Führungsstrukturen integriert (14) sind, die die Lichtwellenleiter (6) in ein vorgegebenes Raster zwingen.
